# EUROPEAN PATENT APPLICATION

(11) **EP 1 167 431 A1**
(43) Date of publication of application: **02.01.2002**
(21) Application number: 00830446.1
(22) Date of filing: 26.06.2000
(51) Int. Cl.: C08K 3/36

(54) **Process for manufacturing a material including polyurethane and material so obtained**

(71) Applicant: Tema Technopolymers S.r.l., 24040 Pontirolo Nuovo (Bergamo) (IT)
(72) Inventor: Auci, Pietro, 24040 Verdellino (Bergamo) (IT)
(74) Representative: Tansini, Elio Fabrizio

(57) **Abstract**

The present invention relates to a process for manufacturing a polyurethane-including material as well as to a material obtained thereby. In addition, the present invention relates to use of silica in a process for manufacturing polyurethane materials.

## Description

The present invention relates to a process for manufacturing a material including polyurethane and to the material thus obtained.

In addition, the present invention relates to use of silica and/or treated silica in a process for preparing polyurethane materials.

It is known that polyurethane-including materials form a very important class of polymeric materials presently available on the market within the wide field of synthetic materials.

Polyurethane-including materials find application in many technical fields, for instance polyurethane materials are employed in producing: fibres, resins for coating, elastomer materials, foamed materials and others.

The wide diffusion of the polyurethane materials is due to the particular features owned by the "polyurethane" polymer.

Polyurethane is a repetition of urethane monomers (carbamic ester) and is usually obtained by poly-addition reactions.

Polyurethane can take a structure formed of straight polymeric chains (thermoplastic materials) or alternatively it can take a structure in which the polymeric chains are disposed to form a tridimensional crystalline structure (thermosetting materials) .

In particular thermoplastic polyurethanes can be employed in preparing foamed materials. Foamed thermoplastic materials have reduced density values as compared with unfoamed compact thermoplastic polyurethanes.

Foamed materials and in particular polyurethanes, widely apply in all sectors in which articles of reduced specific weight are to be produced at low costs.

Among the techniques employed for expanding a thermoplastic polyurethane, use of water, CO₂ or foaming chemical compounds of various nature can be provided. Depending on the quality and amount of the foaming agents employed, polyurethane materials having different density values are obtained.

While different technologies and processes are available for manufacturing foamed materials, the foamed thermoplastic polyurethanes presently on the market appear to be unsuitable to meet applications where a high geometry observance and tolerance control is required as well as an excellent observance of the surface finish.

Practically, the density value of a thermoplastic polyurethane material can be modified with ease but the foamed materials thereby obtained do not yet possess physical, chemical and mechanical features allowing the same to meet specific tolerance and finish requirements.

With reference to a conventional moulding process of a thermoplastic polyurethane material, some possible causes of the above-highlighted properties of the foamed materials will be briefly analysed hereinafter.

To give an example of a process for preparing a moulded article, it is known that a thermoplastic polyurethane material in any physical form thereof, in the form of a granule for example, is charged into a mixing means, a single-screw or multi-screw feeder for example.

Subsequently to the material-charging step, foaming agents are mixed therewith to a pre-established temperature, to form a mixture.

Following a mechanical mixing operation, the mixture consisting of thermoplastic polyurethane and foaming agent softens until it melts. At the instant that the thermoplastic polyurethane, in the form of a granule for example, melts, the foaming agent too reacts.

At this step the foaming process of the thermoplastic polyurethane material begins and propagates.

Subsequently, the melted thermoplastic polyurethane mixture is injected into the mould that will give the desired article its final shape.

Many problems are encountered in a process of the type described above. A first drawback is given by the fact that during the mixing and stirring step strong rubbing actions and frictions are created so that the mixture temperature rises, which will make it very difficult to carry out a thermal control during this stirring and mixing step.

A difficult thermal control during the step of treating the mixture comprising thermoplastic polyurethane and foaming agents causes a non-homogeneous expansion process of the material.

Practically, a disorderly and non-uniform expansion process takes place in the whole mixture. Due to lack of a sufficient thermal control, reaction of the foaming agents occurs in a short period of time which will cause localized sharp reactions within the mass being processed.

For the above reason, the foamed thermoplastic material has porous regions alternated with regions full of true cavities of different sizes. In addition, the foaming process duration can be hardly foreseen and sometimes it can go on during the moulding step too.

A second drawback is given by the fact that the thermoplastic polyurethane material has a very tenacious molecular structure tending to resist the foaming process. The intrinsic resistance that the polymeric material shows against the foaming process produces a material in which the polymeric chains have been submitted to strong stretching stresses.

Therefore, the foamed thermoplastic polyurethane mass shows unevenness in the distribution of the microporosities present therein, as well as in the sizes of the individual porosities and in the distribution of inner stresses.

It is obvious that the above gives rise to a further drawback resulting from the necessity to utilise high pressures during the step of injecting the molten material into the mould for the purpose of obtaining an at least acceptable quality of the finished work.

Therefore, there is a need for a thermoplastic polyurethane material free of the drawbacks of the known art.

In particular it is one aim of the present invention to provide a process for manufacturing a polyurethane material preferably of the thermoplastic type which can be foamed in a controlled and uniform manner and at the desired foaming degree depending on the intended uses.

Another aim of the invention is to obtain a thermoplastic material having the above described features and adapted to be used in a moulding operation giving rise to articles of very high quality in terms of surface finish and geometric observance of the tolerances.

The foregoing and further aims that will become apparent during the following detailed descriptions have been achieved by the Applicant that has found it useful to employ a particular additive in a technological preparation process of a thermoplastic polyurethane material.

In particular, the Applicant has surprisingly selected a particular type of oxide from the additives.

It is therefore a first objet of the present invention to provide a process for manufacturing a polymeric material including a thermoplastic polyurethane the essential features of which are set out in the appended independent claim.

Other preferred embodiments are described in the appended dependent claims.

Further technical features and the advantages of the invention will be best understood from the following detailed description.

For carrying out preparation of the thermoplastic polyurethane material, reaction of at least one first and one second reactant is provided, the features of these reactants being better detailed below.

In particular, the first reactant contains isocyanate functional groups capable of reacting with the hydroxyl functional groups contained in the other reactant.

Preferably said first reactant can be in the form of a monomer or in a partly reacted form, without obviously limiting the invention scope.

Said first reactant can be in any physical form provided its reactivity is not limited.

For instance, said first reactant can be in a liquid or dispersed form. Advantageously, said first reactant may comprise charges, additives and/or filling materials which in turn may be in a liquid or solid form, commonly employed in this specific technical field.

For example, said first reactant can be a diisocyanate of general formula O=C=N-R-N=C=O, a triisocyanate of general formula O=C=N-R(-N=C=O)₂; wherein R can be an aromatic and/or alkyl group or chain, without limiting the invention scope at all.

The second reactant contains hydroxyl functional groups capable of reacting with the isocyanate functional groups contained in the first reactant.

Preferably, said second reactant can be in the form of a monomer or in a partly reacted form.

Said second reactant can be in any physical form provided its reactivity is not limited.

For instance, said second reactant can be in a liquid or dispersed form. Advantageously, said second reactant may include charges, additives and/or filling materials which in turn may be in a liquid or solid form, commonly employed in this specific technical field.

For example, said second reactant can be a glycol of general formula H-O-R-O-H, wherein R can be an aromatic and/or alkyl group or chain; an organic and/or alkyl divalent alcohol; an organic and/or alkyl trivalent alcohol without limiting the invention scope at all.

The process comprises a reaction step between a first reactant, containing isocyanate functional groups and a second reactant containing hydroxyl functional groups. Clearly the order according to which the two reactants are mixed with each other or possibly with other additives in the reaction step depends on the usual procedure well known to those skilled in the art.

Advantageously, the reaction step between the two reactants can be conducted following various operating modalities involving use of reactor means, reaction times, reaction temperatures and mixing steps usually employed by those skilled in the art.

Generally, said reaction step between the two reactants leads to formation of a polymeric material that preferably will have a straight structure (thermoplastic material).

The process being the object of the invention comprises at least one further step involving silica addition.

In a first preferred embodiment of the process, silica is added to said first reactant prior to said reaction step.

In a second preferred embodiment of the process, silica is added to said second reactant prior to said reaction step.

In a third preferred embodiment of the process, silica can be also added during the reaction step between said first and second reactants.

In particular, the first and second reactants, typically in a liquid phase, can be provided to be associated and mixed with each other with addition of the desired amounts of silica, in a conventional single-screw or multi-screw feeding and mixing device.

In a fourth preferred embodiment of the process, silica is added subsequently to the reaction step between said first and second reactants. In this case it may be provided for the thermoplastic granule to be brought to the melting temperature and then silica is added.

Silica or silicon monoxide that is used in the process of the invention can be either of natural origin (cristobalite, tridymite, low quartz, high quartz) or of synthetic origin and in addition it can have an amorphous, crystalline or colloidal structure.

Preferably silica herein employed is a hydrophobic silica.

The Applicant in the process of the invention has found it particularly advantageous to use silica in the form of compounds of treated silica. Practically, there are some treatments in which the silica surface is completely coated with particular treatment agents such as fluid silicone, silanes or silicone derivatives and others. The treatment agent modifies the silica surface nature from hydrophilic to hydrophobic.

A first example of treated silica is given by the compound CAB-O-SIL® TS-720 (Treated fumed silica; Cabot Corporation). It is a silica compound treated with fluid dimethyl silicone. Treatment makes silica very hydrophobic.

A second example of treated silica is given by the compound CAB-O-SIL® TS-610 (Treated fumed silica; Cabot Corporation). It is a silica compound treated with dimethyl chlorosilane. Treatment makes silica very hydrophobic.

A third example of treated silica is given by the compound CAB-O-SIL® TS-530 (Treated fumed silica; Cabot Corporation). It is a silica compound treated with hexamethyl disilazane (HMDS, CAS: 999-97-3). Treatment makes silica very hydrophobic.

Use of silica in the form of particles and in particular micronized pyrogenic silica or synthetic silicon dioxide amorphous to X rays is particularly advantageous.

It is pointed out that all the above mentioned silica types are silica examples finding valid application for the purposes of the present invention.

Silica is homogeneously distributed in the thermoplastic polyurethane mass in the form of fibres, powders, granules, aggregates and chains.

The silica amount that can be employed in the process of the invention greatly varies depending on the type of polymeric material to be obtained.

Practically, the material containing thermoplastic polyurethane and silica can be employed without limitations as an unfoamed compact polyurethane material or alternatively it can be employed as a polyurethane material to be subsequently foamed by use of appropriate foaming agents.

Preferably, silica can be employed in a concentration by weight included between 0.1 and 10% with respect to the total weight of the thermoplastic polyurethane material and silica; more preferably in a concentration included between 0.1 and 5%.

Advantageously, the process of the invention may comprise further steps enabling the material containing polyurethane and silica and possibly other additives to be obtained in the form of granules or pellets as a raw material for subsequent mechanical-working operations.

Alternatively, the process may comprise at least one step of adding at least one foaming agent to said polyurethane material.

It is a second object of the present invention to provide a thermoplastic polymeric material including polyurethane, the essential features of which are set out in the appended independent claim.

Other preferred embodiments of said material are described in the appended dependent claims.

Preferably, the polymeric material may also comprise additives, filling charges and dyes.

The thermoplastic polyurethane material being the object of the present invention comprises silica.

Preferably, said silica can be either of natural origin (cristobalite, tridymite, low quartz, high quartz, for example) or of synthetic origin and in addition it can have an amorphous, crystalline or colloidal structure.

Advantageously the polymeric material being the object of the present invention comprises silica in the form of treated-silica compounds as previously described.

Use of micronized pyrogenic silica or synthetic silicon dioxide amorphous to X rays appears particularly advantageous.

The polyurethane material comprises a varying silica amount depending on the type of polymeric material to be obtained.

Preferably, silica can be employed in a concentration by weight included between 0.1 and 10% with respect to the total weight of the polyurethane material and silica; more preferably, in a concentration included between 0.1 and 5%.

Silica, in the form of very thin and lightweight fibre for example, behaves like a lubricant for the thermoplastic polyurethane polymeric chains. Practically, the polyurethane chains slide on each other due to the presence of silica and consequently during a foaming process they offer less resistance to stretching. The obtained polyurethane material is less stressed. A material having these features can be melted and injected into a mould to obtain a moulded article of the desired shape.

Alternatively, the material comprising thermoplastic polyurethane and silica can be foamed with appropriate foaming agents. In the last-mentioned case the foaming agents do not find a rigid molecular structure offering resistance to the foaming process, because the presence of silica enables better sliding of the polymeric chains.

The particular types of silica employed by the Applicant enable foamed polyurethane materials to be for example obtained which have a density value included between 0.2 and 1.2 g/cm³; preferably between 0.3 and 1.1 g/cm³; more preferably a density value ranging from 0.4 to 0.8 g/cm³.

It is a further object of the present invention to provide use of silica in processes for manufacture of thermoplastic polyurethane materials as set out in the appended independent claim.

Other preferred embodiments concerning use of silica in a process for manufacturing a polyurethane material are described in the appended dependent claims.

Preferably, the silica or silicon oxide used in the processes for manufacturing thermoplastic polyurethane materials can be either of natural origin (cristobalite, tridymite, low quartz, high quartz, for example) or of synthetic origin and in addition it can have an amorphous, crystalline or colloidal structure.

Preferably silica employed in the present invention is a hydrophobic silica.

The Applicant in the process of the invention has found it particularly advantageous to use silica in the form of compounds of treated silica. Practically, there are some treatments in which the silica surface is completely coated with particular treatment agents such as fluid silicone, silanes or silicone derivatives and others. The treatment agent modifies the silica surface nature from hydrophilic to hydrophobic.

A first example of treated silica is given by the compound CAB-O-SIL® TS-720 (Treated fumed silica; Cabot Corporation). It is a silica compound treated with fluid dimethyl silicone. Treatment makes silica very hydrophobic.

A second example of treated silica is given by the compound CAB-O-SIL® TS-610 (Treated fumed silica; Cabot Corporation). It is a silica compound treated with dimethyl chlorosilane. Treatment makes silica very hydrophobic.

A third example of treated silica is given by the compound CAB-O-SIL® TS-530 (Treated fumed silica; Cabot Corporation). It is a silica compound treated with hexamethyl disilazane (HMDS, CAS: 999-97-3). Treatment makes silica very hydrophobic.

Use of silica in the form of particles and in particular micronized pyrogenic silica or synthetic silicon dioxide amorphous to X rays is particularly advantageous for preparation of polyurethane materials.

The silica amount that can be employed in a process for manufacturing thermoplastic polyurethane materials may vary depending on the type of polymeric material to be obtained.

Preferably, for manufacturing thermoplastic polyurethane materials, silica is employed in a concentration by weight included between 0.1 and 10% with respect to the total weight of the thermoplastic polyurethane material and silica; more preferably in a concentration included between 0.1 and 5%.

It is a further object of the present invention to provide use of a polymeric material including thermoplastic polyurethane and silica in a process for manufacturing a foamed material, as set out in the appended independent claim.

Use of a polymeric material comprising thermoplastic polyurethane and silica appears advantageous in a moulding process of a foamed material, a thermoplastic foamed polyurethane material for example.

The Applicant in the practical application of the present invention has found a series of advantages that are reproduced hereinafter.

A first advantage resides in that a material comprising thermoplastic polyurethane and silica, during the moulding step for example, has a very high injection speed enabling use of controlled forces and pressures that can be easily reached with traditional machinery.

A second advantage is given by the fact that the material comprising polyurethane and silica can be submitted to aesthetic-finish steps and dyeing steps to obtain articles of excellent finish and good commercial value.

A further advantage resides in that the material comprising polyurethane and silica has a good dimensional stability and elastic properties, is light in weight, has a good resistance to wear and can be recycled.

A still further advantage of a material comprising polyurethane and silica is given by the fact that if it is submitted to a foaming process its expansion takes place in a gradual and uniform manner without causing sharp expansion reactions within the mass under foaming.

Finally, the material being the object of the present invention can be employed for obtaining a wide variety of foamed materials to be put on the market as an alternative in order to replace foamed PVC and foamed thermoplastic rubbers.

## Claims

1. A process for manufacturing a polyurethane-including polymeric material comprising a reaction step between a first reactant containing isocyanate functional groups and a second reactant containing hydroxyl functional groups, both said reactants being capable of reacting with each other to define a predetermined amount of polyurethane material, **characterized in that** said process comprises at least one further step involving silica addition.

2. A process as claimed in claim 1, **characterized in that** silica is added to said first reactant.

3. A process as claimed in claim 1 or 2, **characterized in that** silica is added to said second reactant.

4. A process as claimed in one or more of the preceding claims, **characterized in that** silica is added during the reaction step between said first and second reactants.

5. A process as claimed in one or more of the preceding claims, **characterized in that** silica is added subsequently to the reaction step between said first and second reactants.

6. A process as claimed in one or more of the preceding claims, **characterized in that** silica is of natural or synthetic origin.

7. A process as claimed in claim 6, **characterized in that** silica has an amorphous, crystalline or colloidal structure.

8. A process as claimed in one or more of the preceding claims, **characterized in that** silica is in the form of treated-silica compounds.

9. A process as claimed in claim 8, **characterized in that** the treated silica is silica coated with treatment agents modifying the silica surface nature from hydrophilic to hydrophobic.

10. A process as claimed in one or more of the preceding claims, **characterized in that** silica is a micronized pyrogenic silica or synthetic silicon bioxide amorphous to X rays.

11. A process as claimed in one or more of the preceding claims, **characterized in that** silica is added in a concentration included between 0.1 and 10% by weight with respect to the total weight of the polyurethane material and silica.

12. A process as claimed in one or more of the preceding claims **characterized in that** it comprises at least one step of adding at least one foaming agent to said polyurethane material.

13. A process as claimed in one or more of the preceding claims, **characterized in that** said polyurethane material is a thermoplastic material.

14. A polyurethane-including polymeric material **characterized in that** it comprises silica.

15. A material as claimed in claim 14, **characterized in that** silica is of natural or synthetic origin.

16. A material as claimed in claim 14 or 15, **characterized in that** silica has an amorphous, crystalline or colloidal structure.

17. A material as claimed in one or more of the preceding claims, **characterized in that** silica is in the form of treated-silica compounds.

18. A material as claimed in claim 17, **characterized in that** the treated silica is silica coated with treatment agents modifying the silica surface nature from hydrophilic to hydrophobic.

19. A material as claimed in one or more of the preceding claims, **characterized in that** said silica is homogeneously distributed in the polyurethane material mass in the form of particles, preferably fibres, powders or granules.

20. A material as claimed in one or more of the preceding claims, **characterized in that** silica is a micronized pyrogenic silica or synthetic silicon bioxide amorphous to X rays.

21. A material as claimed in one or more of the preceding claims, **characterized in that** silica is in a concentration included between 0.1 and 10% by weight with respect to the total weight of the polyurethane material and silica.

22. A material as claimed in one or more of the preceding claims, **characterized in that** it comprises at least one foaming agent.

23. Use of silica in a process for manufacturing polyurethane materials.

24. Use of a polymeric material comprising polyurethane and silica according to one or more of claims 14 to 22, in a process for manufacturing a foamed material.

25. Use of a polymeric material as claimed in claim 24, in a moulding process of foamed materials.

26. Use as claimed in claim 24 or 25 **characterized in that** said foamed material is a thermoplastic polyurethane.
